# DEMANDE DE BREVET EUROPEEN

(11) **EP 4 764 630 A1**
(43) Date de publication de la demande: **24.06.2026**
(21) Numéro de dépôt: 24222642.1
(22) Date de dépôt: 20.12.2024
(51) Int. Cl.: G02B 6/12, G02B 6/136, G02B 6/293

(54) **AJUSTEMENT DE MICRO ET NANO RÉSONATEURS PHOTONIQUES PAR GRAVURE CHIMIQUE LOCALE THERMO-ACTIVÉE DÉCLENCHÉE PAR UNE LUMIÈRE RÉSONANTE**

(71) Demandeur: Université Paris Cité, 75006 Paris (FR); Centre National de la Recherche Scientifique, 75016 Paris (FR)
(72) Inventeur: FAVERO, Ivan, 75012 Paris (FR); NESHASTEH, Hamidreza, 94200 Ivry-sur-Seine (FR); BELACEL, Cherif, 94140 Alfortville (FR)
(74) Mandataire: IPAZ

(57) **Abrégé**

Procédé pour accorder une longueur d'onde de résonance d'au moins un résonateur photonique, le résonateur étant un micro résonateur ou un nano résonateur photonique, le résonateur présentant des dimensions définissant une longueur d'onde de résonance, le résonateur étant placé dans un fluide, le procédé comprenant une étape d'injection de lumière dans le résonateur placé dans le fluide, la lumière injectée présentant une longueur d'onde égale à la longueur d'onde de résonance du résonateur, de sorte que la lumière injectée résonne à l'intérieur du résonateur, le procédé étant caractérisé en ce que le fluide dans lequel le résonateur est placé est un fluide de gravure chimique fortement dilué, la lumière injectée activant thermiquement la gravure chimique du résonateur.

## Description

### Domaine technique

L'invention a trait aux résonateurs photoniques, et plus particulièrement aux micro et nano résonateurs photoniques.

Par résonateurs photoniques, on désigne ici des structures permettant un confinement important de la lumière dans un petit volume (cavité), à certaines fréquences/longueurs d'onde, la lumière venant résonner dans la cavité, augmentant ainsi l'intensité du champ électromagnétique au sein de la cavité.

Les micro résonateurs photoniques sont bien souvent des dispositifs optiques intégrés sur des puces ressemblant à celles de la micro-électronique et des micro-processeurs.

Par nano résonateurs photoniques, on désigne ici des résonateurs photoniques de très petite taille, dont les fréquences de résonance varient très fortement avec les dimensions. Ces variations abruptes engendrent de grands défis en termes de contrôle des dimensions, lorsque les nano résonateurs doivent être parfaitement accordés à la longueur d'onde d'un laser par exemple, ou d'un étalon de référence, ou encore lorsqu'on doit syntoniser plusieurs résonateurs de grand facteur de qualité entre eux.

### Etat de la technique

Les micro résonateurs photoniques sont utilisés comme cavités résonantes dans des lasers, dans la génération de peignes de fréquences, dans les technologies de filtres optiques de commutation, dans des mutliplexeurs, des modulateurs et commutateurs optiques, et sont fréquemment présents dans les domaines des télécommunications et des technologies quantiques.

Les micro et nano résonateurs photoniques sont également utilisés comme capteurs optiques, pour des applications en chimie, en biologie, en détection dite environnementale, notamment pour la détection de molécules cibles.

Pour un état général de la technique des micro résonateurs photoniques, on peut se référer par exemples aux documents Girault, Micro-résonateurs intégrés pour des applications capteurs, thèse université de Rennes, 2016 *;* Daud et al. Simulation of Optical Soliton Control in Micro and Nanoring Resonator Systems, ISBN 978-3-319-15484-8, Springer, 2015*, ou encore* Anthony Choi, Handbook of Optical Microcavities, ISBN 9789814463249, Jenny Standford Publishing, 2015*.*

Les micro résonateurs photoniques peuvent prendre des aspects variés, avec des formes planaires (tels qu'anneaux, hippodromes, spirales, disques) ou encore des microsphères dans un matériau optique transparent dans le domaine spectral d'intérêt.

Les micro résonateurs photoniques à mode de galerie sont le plus souvent en forme d'anneau ou d'hippodrome.

Un résonateur en anneau comprend une cavité résonante circulaire couplée, avec un écartement (*gap*) déterminé, à un guide rectiligne ou deux guides rectilignes, utilisés comme ports d'injection et d'extraction de l'onde électromagnétique.

Le couplage de la cavité résonante circulaire avec les guides peut être vertical, la cavité étant réalisée au dessus ou en dessous d'une couche de confinement optique contenant les guides d'onde.

Le couplage de la cavité résonante circulaire avec les guides peut être latéral (ou horizontal), la cavité résonante circulaire étant dans le même plan que des guides d'ondes. Le couplage horizontal impose un contrôle précis de l'écartement, souvent inférieur au micromètre, dans la zone de couplage.

Des exemples de micro résonateurs photoniques en anneau ou en hippodrome peuvent être trouvés dans les documents WO2024210740 (Univ Twente, 2024), EP4152082 (ZTE, 2023), WO2022182687 (Microtech, 2022), EP3615995 (Huawei, 2020), FR3090909 (ST Microelectronics, 2020), EP3385784 (CEA, 2018).

Pour produire des micro résonateurs commercialisables à grande échelle et à faible coût, l'industrie s'est concentrée sur la photonique intégrée au silicium, matériau bénéficiant de la maturité technologique de l'industrie microélectronique.

En conséquence, la photonique sur silicium s'est fortement développée ces dernières années, tout comme les micro résonateurs associés, au cours d'un processus de miniaturisation et d'intégration de ces technologies.

La fabrication des micro résonateurs photoniques est réalisée en salle blanche, utilisant des techniques telles que la lithographie optique ou électronique, la gravure sèche (par plasma) ou humide (en solution liquide).

La lithographie électronique permet de définir des motifs avec une précision relative de l'ordre de 1 % sur les dimensions microniques souhaitées.

Les procédés de gravure, qu'ils soient secs ou humides, sont utilisés pour transférer ces motifs sur le matériau de base. Grâce à ces techniques, il est possible de fabriquer des nanostructures présentant une dispersion en dimensions de l'ordre de quelques nanomètres à une dizaine de nanomètres, assurant ainsi une grande précision et uniformité dans les structures finales.

La résolution et la reproductibilité des dimensions obtenues par ces techniques correspondent donc à une erreur de l'ordre de 1 % par rapport aux dimensions des résonateurs microniques voulus, ce qui représente l'état de l'art dans les meilleures salles blanches industrielles et académiques.

Toutefois, ces imperfections entraînent une dispersion des longueurs d'onde de résonance optique des résonateurs, impactant négativement de nombreuses applications. En effet, avec des facteurs de qualité qui atteignent à présent des valeurs entre 10^3 et 10^8 dans les meilleurs micro résonateurs, une dispersion de l'ordre de 1% signifie que des résonateurs nominalement identiques résonnent en réalité, une fois fabriqués, à des longueurs d'onde distinctes.

Afin d'améliorer la reproductibilité et de réduire la dispersion des longueurs d'onde de résonance optique, plusieurs techniques d'ajustement (*tuning*) de micro résonateurs ont été proposées.

On peut se référer par exemple au document WO02/25338 (MIT, 2002), qui décrit divers procédés de modification des caractéristiques de résonance de micro résonateurs optiques à guides d'ondes, de tailles comprises entre 0.1 micromètre à 1 mm, les procédés comprenant le dépôt, la croissance ou l'élimination chimique d'un film mince dans ou autour du noyau des micro résonateurs.

Les principales techniques d'ajustement de micro résonateurs proposées dans l'art antérieur peuvent être présentées comme suit.

Dans une première technique ancienne, des molécules d'azote sont adsorbées sur des microcavités optiques, modifiant la longueur d'onde de résonance.

On peut se référer par exemple au document Srinivasan et al., Optical fiber taper coupling and high-resolution wavelength tuning of microdisk resonators at cryogenic températures, Appl. Phys. Lett. 90, 031114, 2007, doi.org/10.1063/1.2431719*.* On peut se référer également au document US8208502 (California Institute of Technology, 2012).

Cette première technique présente de nombreux inconvénients. En particulier, cette technique nécessite un vide poussé (10⁻⁶ Torr) et des températures cryogéniques, inférieures à 15K. De plus, l'azote forme un dépôt cristallin, réduisant les performances du résonateurs, et toute remontée de la température au-delà de 28K entraîne une désorption de l'azote, avec une forte variation de la longueur d'onde de résonance. Selon une deuxième technique ancienne, un dépôt d'une couche photochromique et une irradiation, par exemple UV, permet d'accorder des résonateurs.

On peut se référer par exemple au document Sridharan et al. Réversible tuning of photonic crystal cavities using photochromic thin films, Appl. Phys. Lett. 96, 153303, 2010, doi.org/10.1063/1.3377910*,* qui décrit le dépôt d'une couche comprenant un mélange d'un matériau photochrome (spiropyranne) et de polyméthacrylate de méthyle (PMMA), l'irradiation par une lumière UV de cette couche entraînant le changement de l'indice de réfraction, et la modification de la longueur d'onde de résonance. Cette deuxième technique présente des inconvénients. En particulier, les propriétés du matériau photochrome ne sont pas parfaitement réversibles et sont dégradées lors des cycles successifs d'illumination. Par ailleurs, le facteur de qualité des résonateurs est diminué par la présence de la couche photochrome.

Selon une troisième technique ancienne, une gravure photoélectrochimique du résonateur est induite sous lumière UV.

On peut se reporter par exemple au document Niu et al. A full free spectral range tuning of p-i-n doped gallium nitride microdisk cavity, Appl. Phys. Lett. 101, 161105, 2012, doi.org/10.1063/1.4744947*,* qui décrit une irradiation par laser UV (380 nm) pendant une durée comprise entre 30 et 60 secondes, de la couche p-GaN d'un micro disque de nitrure de gallium, placé dans l'eau, la puissance laser incidente étant de 150 nW, 450n W ou 960 nW.

Cette troisième technique présente des inconvénients. En particulier, cette technique manque de précision, les modifications de longueur d'onde de résonance étant variables d'un essai à un autre (entre 17 et 32 nm/µW/min). Par ailleurs, cette technique ne permet pas l'accord de plusieurs résonateurs entre eux.

Selon une quatrième technique ancienne, la résonance du micro résonateur est modifiée par effet thermo-optique, en appliquant une tension, pour chauffer localement le résonateur.

On eut se référer par exemple au document Shainline et al. Broad tuning of whispering-gallery modes in silicon microdisks, Optics express, 18, 14, 14345, 2010, doi.org/10.1364/OE.18.014345*,* qui décrit une chauffe par effet Joule d'un micro résonateur.

Cette quatrième technique présente des inconvénients. En particulier, cette technique requiert la présence d'électrodes métalliques qui dégradent le résonateur. Par ailleurs, cette technique consomme de l'énergie en continu pour maintenir l'ajustement de la fréquence de résonance.

Selon une cinquième technique, plus récente, un recuit in-situ, via des éléments de chauffage intégrés, permet de modifier de manière semi-permanente l'indice de réfraction d'une gaine dans des filtres à résonateur annulaire, ainsi qu'il est décrit dans le document Spector et al. Localized in situ cladding annealing for post-fabrication trimming of silicon photonic integrated circuits, Optics Express, 24, 6, 5996, 2016, doi: 10.1364/OE.24.005996*.* Le matériau subissant le recuit est par exemple de l'hydrogène silsequioxane (HSQ), une chauffe à 300°C permettant un ajustement de 3 nm pour la longueur d'onde de résonance. Cette cinquième technique présente des inconvénients. En particulier, cette technique réduit la densité surfacique des éléments photoniques, nécessite une consommation électrique, et n'est pas sélective, en ce sens qu'elle modifie tous les résonateurs de la puce photonique de la même manière.

Selon une sixième technique, récente, une syntonisation in-situ des résonateurs à cristaux photoniques par nano-oxydation utilise la pointe d'un microscope à force atomique (AFM), pour ajuster précisément et de manière permanente les propriétés optiques et mécaniques des résonateurs. On peut se référer par exemple au document Hatipoglu et al. In situ tuning of optomechanical crystals with nano-oxidation, Optica, 11, 3, 371-375, 2024, doi.orgl10.1364/OPTICA.516479*.*

Cette technique présente des inconvénients. En particulier, cette technique est très lente et son application à un seul résonateur à la fois la rend en pratique inadaptée aux applications industrielles.

Selon une technique récente, une lumière laser dont la longueur d'onde se situe dans une plage de transparence du matériau photonique, est injectée de manière résonante dans le résonateur photonique. La lumière amplifiée à résonance dans le résonateur déclenche une réaction de gravure électrochimique entre les surfaces du résonateur et un fluide ionique entourant le résonateur, produisant une gravure de ce dernier. On peut se référer au document EP3268783 (Université Paris Diderot, 2018), qui décrit un procédé d'ajustement de la fréquence de résonance de micro résonateurs et nano résonateurs photoniques.

Dans ce procédé antérieur, la lumière est injectée dans le résonateur immergé dans un fluide ionique, la longueur d'onde de la lumière injectée étant égale à la longueur d'onde de résonance, déclenchant une gravure photo électrochimique (PEC), la gravure diminuant les dimensions du résonateur, et accordant sa longueur d'onde de résonance.

La lumière est injectée par un laser, et la longueur d'onde de la lumière monochromatique injectée est supérieure à la longueur d'onde de bande interdite du résonateur. La longueur d'onde de résonance du résonateur est diminuée lors de la réduction de dimension produite par la gravure, jusqu'à une valeur cible. La longueur d'onde du laser est également progressivement diminuée au cours de l'ajustement, de sorte à suivre la variation de la longueur d'onde du résonateur et à maintenir le processus de gravure, jusqu'à ce que la longueur d'onde cible soit atteinte.

Le résonateur photonique est en arséniure de gallium ou en silicium. Lorsque le résonateur est en arséniure de gallium, le fluide contenant des ions et entourant le résonateur est par exemple de l'eau. Lorsque le résonateur est en silicium, le fluide contenant des ions et entourant le résonateur est un liquide ou un gaz à base de fluor.

La technique décrite dans le document EP3268783 présente des avantages. Cette technique est résonante, donc sélective. Cette technique produit des résultats permanents, possède une grande précision, et peut s'étendre à plusieurs résonateurs pour les syntoniser en grand nombre. Pour les structures photoniques où une gravure photo-électrochimique (PEC) peut être activée par de la lumière résonante, cette méthode a démontré une précision sub-atomique sur le contrôle des dimensions effectives des résonateurs, que ce soit à l'échelle d'un résonateur unique ou pour la syntonisation de multiples résonateurs. Cette technique permet d'ajuster le mode optique d'un résonateur photonique individuel illuminé de manière résonante, sans altérer les autres résonateurs qui possèdent d'autres longueurs d'onde de résonance.

On peut se référer également au document Gil-Santos et al. Scalable high-precision tuning of photonic resonators by résonant cavity-enhanced photoelectrochemical etching, Nature Communications 8, 14267, 2017, DOI: 10.1038/ncomms14267*,* qui décrit le réglage de la résonance à quelques nm pour des résonateurs en arséniure de galium, par gravure photo-électrochimique (PEC), le résonateur étant placé dans de l'eau, ou dans de l'air humide, d'autres liquides ioniques pouvant être utilisés (ammoniaque, alcool isopropylique).

La technique décrite dans le document EP3268783 présente toutefois la limitation de n'être employable que lorsqu'une réaction photo-électrochimique (PEC) entre le matériau photonique et le fluide existe et peut être déclenchée par la lumière. Ce n'est pas toujours le cas, et même lorsque c'est le cas, cela peut poser de sévères limitations si le fluide à employer est dangereux ou onéreux, ou si la puissance lumineuse requise est trop importante, limitant ainsi les applications.

### Objets de l'invention

Un des objets de l'invention est de fournir un procédé d'ajustement de la fréquence de résonance de micro résonateurs photoniques, avec une précision permettant à ces résonateurs d'être parfaitement accordés à la longueur d'onde d'un laser, ou d'un étalon de référence, le procédé assurant un réglage permanent de la fréquence de résonance, ce réglage étant peu coûteux et précis.

Un autre objet de l'invention est de fournir un procédé d'ajustement de la fréquence de résonance de micro résonateurs photoniques, permettant de syntoniser plusieurs résonateurs de grand facteur de qualité entre eux.

### Présentation générale de l'invention

A ces fins, il est proposé, selon un premier aspect, un procédé pour accorder une longueur d'onde de résonance optique d'au moins un résonateur photonique, le résonateur étant un micro résonateur ou un nano résonateur photonique, le résonateur présentant des dimensions définissant une longueur d'onde de résonance optique, le résonateur étant placé dans un fluide, le procédé comprenant une étape d'injection de lumière dans le résonateur placé dans le fluide, la lumière injectée présentant une longueur d'onde égale à la longueur d'onde de résonance optique du résonateur, de sorte que la lumière injectée résonne à l'intérieur du résonateur, le fluide dans lequel le résonateur est placé étant un fluide de gravure chimique capable à une première concentration de graver le matériau du résonateur, en l'absence de lumière, mais utilisé ici à concentration diluée par rapport à la première concentration, de manière à ce que la gravure du résonateur soit désactivée en l'absence de lumière, la lumière injectée et absorbée dans le résonateur activant thermiquement la gravure chimique du résonateur par ledit fluide.

Par concentration diluée, on désigne ici le fait que le fluide de gravure chimique, capable en concentration suffisante de graver le matériau du résonateur, est dilué à une concentration telle que la gravure chimique est très lente, voire inobservable, ou en pratique désactivée, lorsque le résonateur est simplement plongé dans le fluide de gravure.

Par exemple, une solution d'hydroxyde de potassium à 10% grave à température ambiante le silicium à l'échelle atomique, produisant une très faible rugosité, de l'ordre de l'Angström. A des concentrations plus faibles de quelques pourcents, la rugosité de surface est de l'ordre du nanomètre, rendant la gravure impropre. A des concentrations encore plus faibles, la littérature ne rapporte plus de gravure observable pour le silicium. C'est ce régime qui est désigné ici par fortement dilué.

Par exemple, les concentrations utilisées pour le fluide de gravure peuvent entraîner une absence de gravure observable au microscope électronique à balayage, après immersion durant 24h du résonateur dans le fluide de gravure chimique, sans lumière injectée.

L'invention permet, en fonction du ou des matériaux du résonateur, de choisir des fluides de gravure chimique qui gravent ce ou ces matériaux, et de les diluer de telle sorte à les désactiver, aucune gravure du résonateur n'étant observable après immersion du résonateur dans le fluide de gravure dilué, l'injection d'une lumière résonante thermo-activant localement les fluides de gravure, au niveau du résonateur, permettant de graver le résonateur.

Selon l'invention, l'ajustement de micro résonateurs et nano résonateurs photoniques est obtenu par gravure chimique locale, thermo-activée par une lumière résonante. Le résonateur peut être placé dans un fluide de gravure chimique fortement dilué, la concentration de ce fluide étant par exemple au moins de 10 à 100 fois inférieure aux concentrations minimales pour lesquelles ce fluide de gravure est actif. L'injection de lumière résonante active thermiquement la gravure chimique du résonateur.

Dans une mise en oeuvre, le procédé comprend :
- une première étape, dans laquelle le résonateur est placé dans un fluide de gravure chimique d'un matériau du résonateur, le fluide de gravure chimique étant dilué, de sorte que la gravure chimique du matériau du résonateur est désactivée, aucune gravure du matériau du résonateur n'étant observable, aucune lumière n'étant injectée dans le résonateur durant cette première étape,
- une deuxième étape, durant laquelle de la lumière résonante est injectée et absorbée dans le résonateur, la lumière injectée et absorbée augmentant localement la température dans le résonateur et activant thermiquement la gravure chimique du matériau du résonateur, par le fluide de gravure chimique dilué.

Dans diverses mises en oeuvre, le fluide de gravure chimique est à une concentration inférieure à la concentration minimale à partir de laquelle le fluide de gravure chimique grave le matériau du résonateur sans lumière injectée.

Avantageusement, la concentration du fluide de gravure chimique est inférieure, par exemple 10 fois inférieure, à une concentration minimale, la concentration minimale étant celle pour laquelle la gravure du résonateur par le fluide, obtenue sans lumière injectée, produit au bout de 14h un déplacement spectral de la résonance optique du résonateur qui est égal à sa largeur spectrale.

Dans certaines mises en oeuvre, le résonateur est à base de silicium., Le fluide de gravure chimique est par exemple une solution liquide d'hydroxyde de potassium, apte à graver le silicium.

Dans certaines mises en oeuvre, la concentration en hydroxyde de potassium dans le fluide de gravure est inférieure à 1%, avantageusement inférieure à 0.3%. A de telles concentrations, la gravure effectuée par l'hydroxyde de potassium est en pratique désactivée ou tellement lente qu'elle devient quasi-inobservable, lorsqu'un résonateur à base de silicium est simplement plongé dans un tel fluide.

Avantageusement, la vitesse de la gravure du matériau du résonateur varie de manière exponentielle en fonction de la puissance de la lumière injectée, ce qui est la signature d'un processus de gravure thermo-activé. La puissance de la lumière injectée peut ainsi avantageusement être choisie pour contrôler la vitesse de la gravure chimique du matériau du résonateur.

Dans certaines mises en oeuvre, la puissance de la lumière injectée est inférieure à 30 dBm.

Avantageusement, la lumière injectée est monochromatique, et est par exemple produite par une source laser.

Avantageusement, l'injection de lumière dans le résonateur placé dans le fluide de gravure fortement dilué est effectuée à température régulée, de préférence à température ambiante (300K environ).

La gravure effectuée par l'hydroxyde de potassium, à cette température, est en pratique inexistante (désactivée) lorsque la concentration en hydroxyde de potassium est inférieure à 1%.

L'injection de lumière à la fréquence de résonance entraîne un échauffement local du résonateur.

Même dans une plage de transparence du matériau formant le résonateur, une petite fraction de la lumière injectée dans le résonateur est absorbée, et produit un échauffement local, activant thermiquement la gravure.

Avantageusement, la longueur d'onde de la lumière injectée est comprise dans le spectre visible et infrarouge.

Avantageusement, l'étape d'injection de lumière est réalisée avec une technique de couplage optique en champ lointain ou en champ proche, et la lumière est injectée dans un ou plusieurs résonateurs.

Par exemple, le couplage entre le résonateur photonique et un guide d'onde optique placé dans le voisinage du résonateur est obtenu par des ondes évanescentes.

Dans certaines mises en oeuvre particulières, le résonateur est à base de silicium et de silice, et le fluide de gravure chimique est un liquide ou un gaz à base de fluor, avantageusement de l'acide fluorhydrique (HF), en phase vapeur, avec une concentration assez faible pour désactiver la gravure lorsqu'aucune lumière n'est injectée, et qui, une fois la lumière injectée grave la silice du résonateur, par thermo-activation du processus de gravure.

Avantageusement, l'injection de lumière dans le résonateur placé dans le fluide de gravure fortement dilué est effectuée à température régulée. Dans certaines mises en oeuvre, le résonateur photonique est en silicium sur isolant, avantageusement de type disque et anneaux suspendus. Dans d'autres mises en oeuvre, le résonateur photonique est un résonateur photonique à quartz, un résonateur en anneau ou en forme d'hippodrome, un résonateur de Bragg, un résonateur à réseau à rétroaction répartie, un résonateur de Fabry-Perot, un résonateur plasmonique, un résonateur à cristal photonique, ou un résonateur construit dans une métasurface.

Le procédé présente avantageusement les étapes de :
- démarrage de l'étape d'injection de la lumière,
- ajustement de la longueur d'onde de la lumière injectée, de manière à atteindre la longueur d'onde de résonance optique du résonateur,
- abaissement progressif de la longueur d'onde, de manière à suivre la longueur d'onde de résonance optique du résonateur pendant le processus de gravure chimique thermiquement activée, jusqu'à ce qu'une longueur d'onde de résonance ciblée soit atteinte,
- arrêt de l'injection de lumière lorsque la longueur d'onde de résonance ciblée pour le résonateur est atteinte.

Dans certaines mises en oeuvre, l'étape d'abaissement de la longueur d'onde de résonance du résonateur photonique est effectuée par des balayages consécutifs, chaque balayage consistant à balayer la longueur d'onde lumineuse de la lumière injectée entre des valeurs qui comprennent la longueur d'onde de résonance du résonateur photonique. Pour accorder deux résonateurs photoniques, chacun présentant une longueur d'onde de résonance différente, le procédé comprend avantageusement les étapes suivantes :
- réglage de la longueur d'onde lumineuse de la lumière injectée à une valeur supérieure à la longueur d'onde de résonance optique de celui des deux résonateurs, appelé le premier, résonant à la plus grande longueur d'onde,
- abaissement de la longueur d'onde de la lumière injectée, de manière à atteindre la longueur d'onde de résonance du premier résonateur photonique, résonant à la plus grande longueur d'onde, et à débuter le processus de gravure chimique thermiquement activée, dans ce premier résonateur seulement, tandis que le second résonateur photonique présentant une longueur d'onde de résonance inférieure demeure intact,
- abaissement de la longueur d'onde de la lumière injectée, de manière à suivre la longueur d'onde de résonance du premier résonateur au cours de son ajustement, jusqu'à ce que la longueur d'onde de résonance du premier résonateur photonique coïncide à la résonance du second résonateur photonique, les résonateurs photoniques étant ainsi accordés.

Dans certaines mises en oeuvre, le procédé comprend une étape d'abaissement de la longueur d'onde lumineuse injectée, de manière à graver les deux résonateurs photoniques en même temps et au même rythme, de sorte que les deux résonateurs photoniques puissent être accordés à une valeur de longueur d'onde de résonance ciblée commune et présenter les mêmes dimensions et longueur d'onde de résonance optique ciblées.

L'invention se rapporte, selon un deuxième aspect, à un dispositif photonique comprenant au moins un micro résonateur ou un nano résonateur obtenu par un procédé tel que présenté ci-dessus, le résonateur étant parfaitement accordé à la longueur d'onde d'un laser ou d'un étalon de référence.

L'invention se rapporte, selon un troisième aspect, à un dispositif photonique comprenant plusieurs micro résonateurs ou nano résonateurs obtenus par un procédé tel que présenté ci-dessus, tous les résonateurs étant accordés à une valeur de longueur d'onde de résonance ciblée commune, avec une erreur de longueur d'onde pour chaque longueur d'onde de résonance de chaque résonateur photonique par rapport à la valeur de longueur d'onde de résonance ciblée commune qui est inférieure à 10 pm, avantageusement inférieure au pm.

Le ou les résonateurs sont par exemples à base de nitrure d'aluminium et/ou de nitrure de silicium.

Chaque résonateur photonique est par exemple un disque, un résonateur photonique à quartz, un résonateur en anneau ou en forme d'hippodrome, un résonateur de Bragg, un résonateur à réseau à rétroaction répartie, un résonateur de Fabry-Perot, un résonateur à cristal photonique, un résonateur construit au sein d'une métasurface, ou un résonateur plasmonique.

### Présentation de modes de réalisation

D'autres objets et avantages de l'invention apparaîtront à la lumière de la description de modes de réalisation, faite ci-après en référence aux dessins annexés dans lesquels :

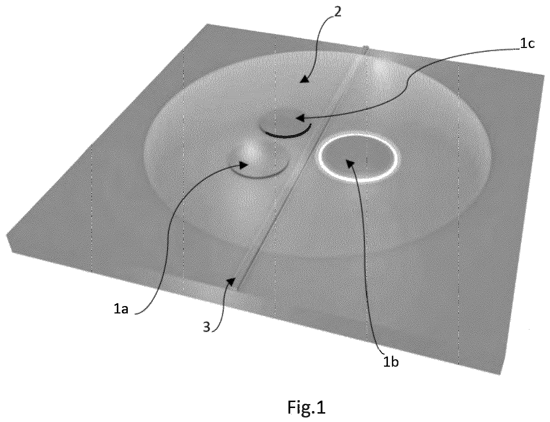

- la figure 1 est une vue schématique illustrant le principe d'une gravure de trois résonateurs placés dans une solution diluée de gravure chimique, les résonateurs étant par exemple en silicium, la gravure chimique étant activée thermiquement localement, à l'échelle d'un résonateur unique, par un rayonnement cohérent tel que produit par un laser, le rayonnement venant cibler un des trois résonateurs et étant émis à la longueur d'onde de résonance du résonateur, la solution diluée étant schématisée par une goutte recouvrant les trois résonateurs ;

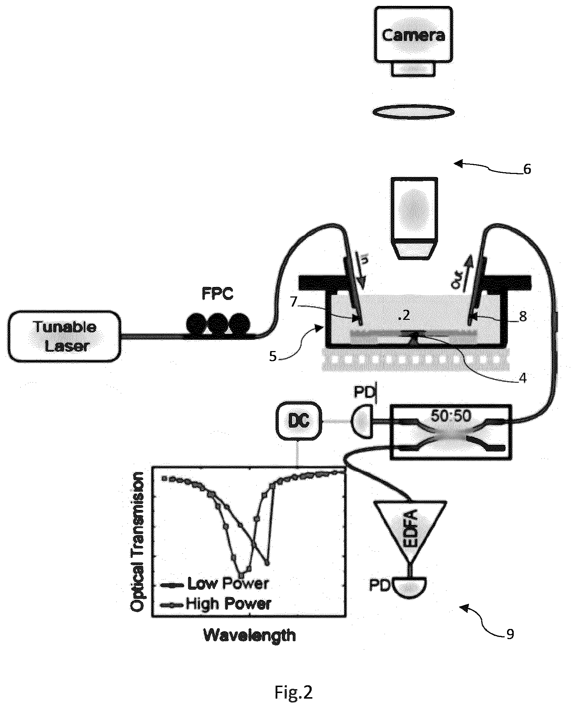

- la figure 2 est une vue schématique d'un dispositif pour la mise en oeuvre d'une gravure chimique d'un résonateur photonique, la gravure chimique étant thermiquement activée par chauffe laser résonante, le résonateur photonique étant placé dans une cuve contenant une solution diluée de gravure chimique, le laser étant de type accordable (*tunable laser*);

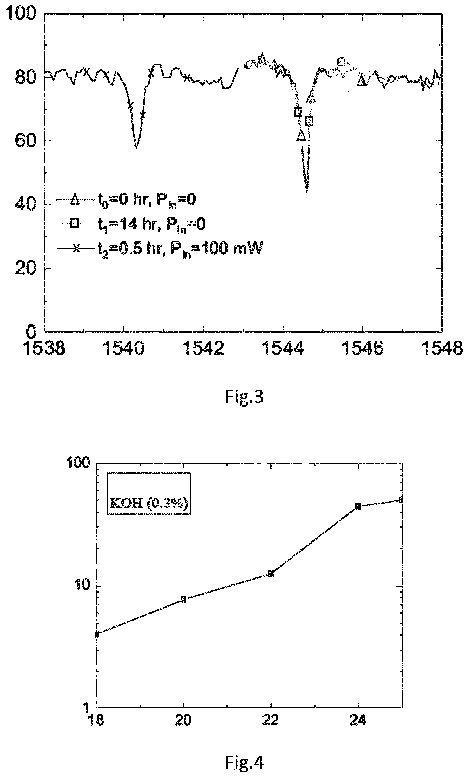

- la figure 3 est un graphe montrant trois spectres de transmission optique (en %) d'un guide d'onde couplé à un résonateur photonique, à l'état initial (t₀=0, Puissance injectée Pᵢₙ=0), et après 14 heures sans rayonnement laser (t₁=14 h, Pᵢₙ=0), la figure 3 montrant le spectre de transmission du guide d'onde après avoir utilisé un rayonnement laser résonant incident de puissance P, pendant une demi-heure (t₂=0.5 h, Pᵢₙ=100 mW), la figure 3 montrant un décalage de quelques nm du pic de transmission, de la valeur initiale d'environ 1545 nm à une valeur d'environ 1540 nm ;
- la figure 4 est un graphe montrant l'évolution du décalage vers les basses longueurs d'ondes (en pm/min) en fonction de la puissance laser incidente (en dBm), pour une solution de gravure chimique d'hydroxyde de potassium KOH de concentration égale à 0.3% ;

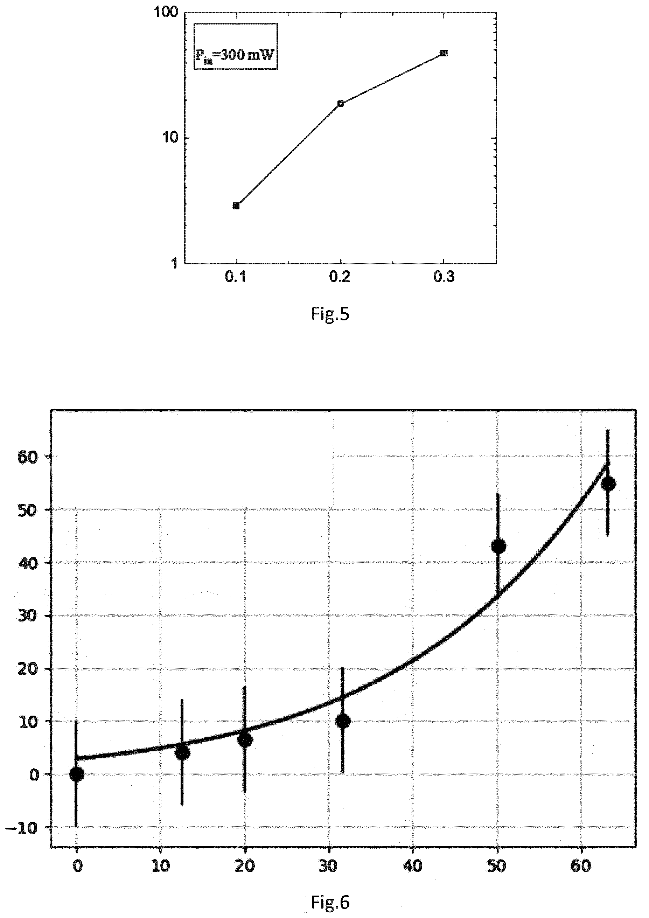

- la figure 5 est un graphe montrant l'évolution du décalage vers les bases longueurs d'ondes (en pm/min) en fonction de la concentration de la solution de gravure chimique (en %), ici l'hydroxyde de potassium KOH ;
- la figure 6 est un graphe montrant les variations de la vitesse de gravure (en pm/min), en fonction de la puissance laser (en mW), les valeurs expérimentales étant représentées par des points, un ajustement selon la loi de thermo-activation d'Arrhenius étant représenté par une courbe en trait plein.

La figure 1 est une vue schématique, illustrant le principe d'une gravure de résonateurs placés dans une solution diluée de gravure chimique, et thermo-activée par une lumière résonante.

Dans la figure 1, trois résonateurs 1a, 1b, 1c sont représentés et sont légèrement différents en dimensions. Il est entendu que dans d'autres mises en oeuvre, un plus grand nombre de résonateurs sont présents dans la solution 2 de gravure chimique.

La solution 2 de gravure chimique est représentée en figure 1 sous la forme d'une goutte fine recouvrant les trois résonateurs. Il est entendu que les résonateurs peuvent être placés dans un fluide, notamment liquide ou gaz, par exemple plongés dans une solution liquide de gravure chimique, fortement diluée.

Les résonateurs 1a, 1b, 1c sont par exemple en silicium, ou en arséniure de gallium.

A la dilution de la solution de gravure mise en oeuvre, aucune gravure n'est apparente ou observable lorsque les résonateurs sont simplement plongés dans la solution de gravure. La gravure est donc en pratique désactivée à ce point.

La gravure chimique est ensuite activée thermiquement par un rayonnement cohérent 3, tel que produit par un laser, par exemple une diode laser.

Le rayonnement laser vient cibler un des résonateurs 1b et est émis à la longueur d'onde de résonance du résonateur 1b. Le rayonnement laser vient ainsi activer thermiquement la gravure chimique de ce résonateur 1b, suite à l'absorption de lumière résonante au sein du résonateur 1b. Cette lumière résonante est schématisée en figure 1 par un halo lumineux entourant le micro résonateur photonique 1b.

La gravure chimique est avantageusement une gravure du silicium par une solution d'hydroxyde de potassium (KOH).

La gravure chimique est activée par l'augmentation locale de la température d'un résonateur 1b, et de la solution qui l'entoure immédiatement, permettant une sélectivité spatiale de la gravure.

La hausse locale de la température est produite par l'échauffement local du résonateur 1b, par la lumière laser injectée à résonance.

Chaque résonateur possédant sa résonance propre, le procédé permet de cibler chaque résonateur 1a, 1b, 1c, indépendamment, grâce à un accord de la longueur d'onde du laser.

La méthode est ainsi sélective en termes de résonateur, mais aussi en termes de matériau, car la vitesse de gravure du silicium par l'hydroxyde de potassium KOH est supérieure de plus de deux ordres de grandeur à celle de la silice par l'hydroxyde de potassium KOH.

Ainsi, seul le dispositif en silicium sélectionné de manière résonante par le laser est gravé, tandis que les autres résonateurs et l'environnement de silice, courant dans les puces photoniques silicium, restent intacts. La figure 2 illustre plus en détail une mise en oeuvre du procédé de gravure chimique activée thermiquement par un rayonnement laser résonant.

Une puce photonique 4 en silicium est immergée dans un contenant 5, par exemple en acide polylactique (PLA), matériau qui n'interagit pas avec l'hydroxyde de potassium KOH.

Avantageusement, le contenant 5 est réalisé par impression 3D additive. Afin de sélectionner le résonateur voulu sur la puce 4, un système d'imagerie 6 en réflexion permet de visualiser la surface de l'échantillon ainsi que les fibres optiques 7, 8.

Des moyens 9 permettant de mesurer la transmission optique des guides d'ondes se couplant aux résonateurs.

Un système de positionnement micrométrique permet de placer les fibres optiques 7, 8 au-dessus des coupleurs à réseaux de Bragg, qui constituent les points d'entrée et de sortie sur la puce 4 pour le signal optique (injection laser et collection du signal de sortie).

Le contenant 5 est rempli d'une solution 2 de gravure chimique fortement diluée, par exemple de l'hydroxyde de potassium KOH à 1% ou moins de concentration.

Le spectre de transmission optique de la structure sélectionnée (guide d'ondes + résonateur) est mesuré.

La figure 3 représente les spectres de transmission optique obtenues, en fonction de la longueur d'onde laser, en nanomètres, à une puissance d'injection laser de 10 µW en entrée de réseau de Bragg.

Un tel spectre est mesuré au temps t₀=0, puis après 14h d'exposition de la structure à la solution 2 d'hydroxyde de potassium KOH, le laser étant éteint pendant les 14h (Pᵢₙ=0). A t₁=14h, on n'observe aucun déplacement de longueur d'onde du résonateur, ce qui signifie qu'il n'y a pas de gravure détectable du résonateur sondé.

Dans un second temps, la puissance laser injectée dans le réseau de Bragg est augmentée à 100 mW, la longueur d'onde laser est ajustée à la longueur d'onde résonante, et on attend une durée d'une demi-heure. Après cette étape, un spectre de transmission est ensuite mesuré à une puissance d'injection laser de 10µW et une variation vers les basses longueurs d'onde de 4 nm est observée pour le creux résonant de transmission.

Ceci est le signe d'une réduction des dimensions du résonateur.

Le reste des résonateurs présents sur la puce photonique ne reçoit aucune lumière laser résonante.

Cela implique qu'il n'y aucun décalage spectral des modes optique des autres résonateurs, et donc aucune variation des dimensions des autres résonateurs.

La gravure est ainsi sélective en termes de résonateur.

Ces mesures sont répétées en faisant varier la puissance d'injection laser, entre 18 et 25 dBm, à 0.3% de concentration de la solution 2 d'hydroxyde de potassium KOH, les résultats étant représentés en figure 4, où la vitesse d'ajustement spectral de la résonance du résonateur est indiquée en picomètres par minute, en fonction de la puissance du laser, en dBm.

Les mesures sont également répétées en faisant varier la concentration de la solution d'hydroxyde de potassium KOH, entre 0.1 et 0.3%, à puissance d'injection laser fixée à 300 mW, les résultats étant représentés en figure 5.

Les figures 4 et 5 illustrent le décalage en longueur d'onde du mode optique du résonateur, par unité de temps (pm/min).

L'effet observé est monotone à la hausse, en fonction de la puissance d'injection, et monotone à la hausse, en fonction de la concentration de la solution basique en hydroxyde de potassium KOH.

Un tel comportement est cohérent avec un processus de gravure chimique thermo-activée, cette activation thermique étant provoquée par la chauffe du résonateur par le laser résonant avec le résonateur.

La figure 6 représente les données expérimentales obtenues, ainsi que la courbe en trait plein pour une loi empirique d'Arrhenius.

Pour une vitesse de gravure conforme à une loi d'Arrhenius, la vitesse de gravure est le produit d'une constante v_0 (qui ne dépend pas de la puissance laser) par une fonction exp (-Ea / kBT), où Ea est l'énergie d'activation de la réaction chimique, à la concentration de solution considérée, kB est la constante de Boltzmann, et T est la température du résonateur, qui évolue linéairement avec la puissance laser utilisée (chauffe laser) et vaut la température ambiante quand la puissance est nulle.

La figure 6 vient conforter l'existence d'une gravure thermo-activée par la chauffe laser, les données expérimentales étant bien ajustées par une telle loi d'Arrhénius.

Le comportement observé pour la gravure thermiquement activée de résonateurs en silicium dans une solution liquide d'hydroxyde de potassium KOH est totalement différent de celui observé lors de la mise en oeuvre du procédé décrit dans le document EP3268783, pour la gravure photo électrochimique (PEC) de résonateurs en Arséniure de Gallium dans l'eau, dans lequel la vitesse de gravure évolue linéairement avec la puissance laser, sur plus d'une décade, et ne peut pas être ajustée par une loi d'Arrhenius.

Lors de la gravure photo électrochimique (PEC) décrite par le document EP3268783, l'ionisation de la matière par le laser déclenche une réaction chimique avec le fluide ionique environnant le résonateur.

Le procédé décrit dans le document EP3268783 ne peut fonctionner que si la réaction photo-électrochimique existe, et s'il est possible d'ioniser la matière du résonateur pour la déclencher. Il n'est pas garanti qu'une telle réaction existe pour chaque matériau à graver, même en jouant sur le fluide ionique.

Le procédé de gravure thermo-activée par la chauffe laser résonante de la présente invention est plus souple : si on connait une solution chimique de gravure pour le matériau, on commence par en abaisser la concentration pour désactiver la gravure, puis on chauffe localement le résonateur avec un laser résonant, pour activer thermiquement la gravure.

Dans une autre mise en oeuvre, des résonateurs silicium sont placés dans un fluide de gravure fortement dilué, le fluide de gravure étant de l'acide fluorhydrique HF, en phase liquide ou vapeur.

La silice jouxtant les résonateurs en silicium, dans la plupart des puces photoniques silicium, sa gravure thermiquement activée par injection d'une lumière résonante modifie les résonances optiques des résonateurs silicium, même si le silicium lui-même n'est pas gravé.

La gravure d'un résonateur par la solution de gravure est avantageusement suivie in situ en temps réel par spectroscopie laser, au sein du liquide ou de la vapeur de solution de gravure.

Par exemple, une vapeur de HF grave la silice jouxtant les résonateurs silicium d'une puce photonique. A l'aide d'un système optique, l'évolution de cette gravure sur un résonateur optique est suivie directement au sein d'une chambre de gravure HF vapeur, alors que la gravure par la vapeur a lieu. Des fenêtres optiques réalisées dans la paroi supérieure de la chambre permettent un accès optique même quand la chambre est close. Une image au microscope optique confocale en réflexion sur la puce peut être obtenue, afin de sélectionner le résonateur sur la puce.

### Avantages de l'invention

L'invention permet la fabrication à grande échelle et à faible coût de micro résonateurs photoniques à très faible dispersion de longueur d'onde de résonance, les dimensions des résonateurs étant reproductibles avec une faible dispersion, les résonateurs étant avantageusement en silicium.

L'invention permet la fabrication de tels résonateurs, avec une précision de quelques Angströms, pour des dimensions de résonateurs de quelques microns, permettant d'ajuster la résonance avec une précision supérieure à 1 pour 10 000.

L'invention permet ainsi la fabrication de nano résonateurs photoniques, parfaitement accordés à la longueur d'onde d'un laser ou d'un étalon de référence.

L'invention permet de syntoniser plusieurs résonateurs de grande qualité, de facteur de qualité 10⁴ ou plus.

L'invention permet de fixer de manière permanente la longueur d'onde de résonance d'un résonateur photonique unique, éliminant ainsi le besoin de systèmes de chaufferettes locales sur l'échantillon.

L'invention permet d'accorder spectralement plusieurs résonateurs simultanément de manière individuelle et déterministe.

L'invention permet la production à grande échelle de résonateurs photoniques en silicium sur isolant (SOI) de type disques et anneaux suspendus, la gravure thermiquement activée par laser résonant étant effectuée avec immersion des résonateurs dans une solution liquide d'hydroxyde de potassium (KOH) déplétée, ces résonateurs reposant sur un piédestal qui les maintient en place sur le substrat.

Le procédé selon la présente invention permet d'ajuster rapidement plusieurs résonateurs en une seule étape.

Le procédé de gravure selon l'invention permet d'obtenir une précision atomique des dimensions structures photoniques.

Un monitoring in-situ, en phase liquide ou vapeur, donne la possibilité d'arrêt de la gravure au moment voulu.

Le monitoring est avantageusement réalisé sur une structure résonante individuelle, et permet donc un ajustement (*tuning*) au niveau d'un résonateur unique.

L'accordage (*tuning*) possède cette sélectivité du fait de l'absorption locale de la lumière par le résonateur sélectionné de manière résonante par le laser, et de l'élévation de la température qui est alors locale au niveau de ce résonateur seulement, et pas des autres, lorsque les résonateurs sont tous désaccordés au début de l'opération.

Dans un procédé selon l'invention, la gravure est permise par une solution fluide (liquide ou vapeur) de gravure, qui a été éventuellement auparavant désactivée par une forte baisse de concentration, et qui ne se réactive que grâce à la chauffe laser du résonateur.

Le procédé selon l'invention (permanent, sélectif, précis, scalable) peut être appliqué à une vaste classe de matériaux et de cas d'usages, en particulier le silicium, matériau central en micro-électronique et en photonique. On peut également appliquer le procédé au Nitrure de Silicium, ou au Nitrure d'Aluminium.

Le procédé selon l'invention est avantageusement mis en oeuvre en sortie de fabrication salle blanche, en service packaging ou en utilisateur final (*end user*)*.*

Des structures de résonateurs ou de dispositifs intégrés dans un système micro fluidique peuvent être ajustés à l'aide de cette méthode même pour l'utilisateur final.

L'invention offre de nombreux avantages, par rapport aux méthodes d'ajustement de la position spectrale des modes optiques de résonateurs photoniques de l'art antérieur.

Dans les méthodes de l'art antérieur d'ajustement (*tuning*) non-permanent, mises en oeuvre dans les fonderies qui fabriquent des résonateurs photoniques, l'ajustement de la position spectrale du mode optique d'un résonateur photonique est réalisé par des chaufferettes thermo-électriques locales, intégrées sur la puce photonique, exploitant l'effet thermo-optique ou la dépendance thermique de l'indice de réfraction. Cet accordage actif et non permanent nécessite des étapes technologiques supplémentaires coûteuses et une consommation d'énergie accrue. De plus, cette technique de l'art antérieur réduit la densité des composants sur une puce photonique, car les composants optiques doivent être suffisamment espacés (selon la longueur caractéristique de la diffusion de la chaleur), pour contrôler l'augmentation locale de la température par la chaufferette.

Le procédé selon la présente invention assure un ajustement permanent, peu coûteux et permet une densité plus élevée de composants photoniques, car les structures sont directement accordées (tunées), de manière permanente.

Le procédé selon la présente invention ne requiert pas d'avoir des chaufferettes locales, ni donc une distance minimale de diffusion de la chaleur entre deux composants.

Le procédé selon la présente invention ne requiert pas d'équipements coûteux, comme un AFM avec une pointe métallisée, ni de contact électrique avec l'échantillon, pour ajuster la longueur d'onde du mode optique.

L'invention permet d'augmenter la densité de dispositifs par mm², en remplaçant les chaufferettes locales actuellement utilisées pour ces besoins, tout en simplifiant le processus de fabrication, réduisant la consommation d'énergie, et les coûts de fabrication, grâce à un nombre réduit d'étapes de fabrication technologiques.

### Applications principales de l'invention

L'invention peut être vue comme un moyen de post-fabrication, afin d'ajuster à souhait de manière sélective les dimensions ou longueur d'onde de résonance de micro et nano résonateurs photoniques, fabriqués en salle blanche.

L'invention trouve applications dans les domaines des technologies quantiques, des télécommunications, de l'intelligence artificielle, de l'agriculture, de l'alimentation, de la santé, et des infrastructures numériques.

L'invention trouve applications dans les domaines de la photonique, de l'optique, de l'optoélectronique, des lasers, des micro et nanotechnologies, des technologies quantiques, des capteurs chimiques notamment pour les sciences de l'information, les télécommunications, le médical, les biotechnologies, l'environnement, le calcul industriel.

## Revendications

1. Procédé pour accorder une longueur d'onde de résonance optique d'au moins un résonateur photonique, le résonateur (1a, 1b, 1c) étant un micro résonateur ou un nano résonateur photonique, le résonateur présentant des dimensions définissant une longueur d'onde de résonance optique, le résonateur étant placé dans un fluide, le procédé comprenant une étape d'injection de lumière monochromatique dans le résonateur placé dans le fluide, la lumière injectée (3) présentant une longueur d'onde égale à la longueur d'onde de résonance optique du résonateur (1b), de sorte que la lumière injectée (3) résonne à l'intérieur du résonateur (1b), le procédé étant **caractérisé en ce que** le fluide dans lequel le résonateur (1a, 1b, 1c) est placé est un fluide de gravure chimique (2) capable à une première concentration de graver le matériau du résonateur (1b) en l'absence de lumière, mais utilisé ici à concentration diluée par rapport à la première concentration, de manière à ce que la gravure du résonateur soit désactivée en l'absence de lumière, la lumière injectée (3) et absorbée dans le résonateur activant thermiquement la gravure chimique du résonateur (1b) par ledit fluide (2) dilué.

2. Procédé selon la revendication 1, dans lequel la concentration diluée du fluide de gravure chimique (2) est inférieure à au moins une concentration minimale, la concentration minimale correspondant à la concentration pour laquelle la gravure du résonateur par le fluide, obtenue sans lumière injectée au bout de 14h produit un déplacement spectral de la résonance optique du résonateur qui est égal à sa largeur spectrale.

3. Procédé selon la revendication 1 ou 2, **caractérisé en ce que** le résonateur (1a, 1b, 1c) est à base de silicium.

4. Procédé selon l'une quelconque des revendications 1 à 3 **caractérisé en ce que** le fluide de gravure chimique (2) est une solution liquide d'hydroxyde de potassium, la concentration en hydroxyde de potassium dans le fluide de gravure chimique (2) étant inférieure à 1%, avantageusement inférieure à 0.3%.

5. Procédé selon l'une quelconque des revendications 1 à 4, **caractérisé en ce que** la puissance de la lumière injectée est choisie pour contrôler la vitesse de la gravure du matériau du résonateur, vitesse qui est une fonction exponentielle de la puissance de la lumière injectée (3).

6. Procédé selon l'une quelconque des revendications 1 à 5, **caractérisé en ce que** l'injection de lumière dans le résonateur placé dans le fluide de gravure dilué est effectuée à température régulée, avantageusement à température ambiante.

7. Procédé selon l'une quelconque des revendications 1 à 6, **caractérisé en ce que** la longueur d'onde de la lumière injectée (3) est comprise dans le spectre visible et infrarouge.

8. Procédé selon l'une quelconque des revendications 1 à 7, **caractérisé en ce que** l'étape d'injection de lumière est réalisée avec une technique de couplage optique en champ lointain ou en champ proche, et où une lumière est injectée jusque dans un ou plusieurs résonateurs.

9. Procédé selon l'une des revendications 1 à 3, 5 à 8, **caractérisé en ce que** le résonateur est à base de silicium et de silice, le fluide de gravure chimique (2) est un liquide ou un gaz à base de fluor, avantageusement de l'acide fluorhydrique en phase vapeur.

10. Procédé selon l'une quelconque des revendications 1 à 9, **caractérisé en ce que** le résonateur photonique est en silicium sur isolant, avantageusement de type disque et anneaux suspendus.

11. Procédé selon l'une quelconque des revendications 1 à 10, **caractérisé en ce que** le résonateur photonique est un résonateur photonique à quartz, un résonateur en anneau ou en forme d'hippodrome, un résonateur de Bragg, un résonateur à réseau à rétroaction répartie, un résonateur de Fabry-Perot, un résonateur à cristal photonique, un résonateur construit au sein d'une métasurface, ou un résonateur plasmonique.

12. Procédé selon l'une quelconque des revendications 1 à 11, comprenant les étapes de :
- démarrage de l'étape d'injection de la lumière,
- ajustement de la longueur d'onde de la lumière injectée, de manière à atteindre la longueur d'onde de résonance optique du résonateur,
- abaissement progressif de la longueur d'onde, de manière à suivre la longueur d'onde de résonance optique du résonateur pendant le processus de gravure chimique thermiquement activée, jusqu'à ce qu'une longueur d'onde de résonance ciblée soit atteinte,
- arrêt de l'injection de lumière lorsque la longueur d'onde de résonance ciblée pour le résonateur est atteinte.

13. Procédé selon l'une quelconque des revendications 1 à 12, pour accorder deux résonateurs photoniques, chacun présentant une longueur d'onde de résonance différente, le procédé comprenant les étapes suivantes :
- réglage de la longueur d'onde de la lumière injectée à une valeur supérieure à la longueur d'onde de résonance optique du plus grand des deux résonateurs, celui résonant à la plus grande longueur d'onde,
- abaissement de la longueur d'onde de la lumière injectée de manière à atteindre une première longueur d'onde de résonance optique de ce premier résonateur photonique et débuter le processus de gravure chimique thermiquement activée au sein de ce premier résonateur seulement, tandis qu'un second résonateur photonique présentant une seconde longueur d'onde de résonance inférieure à la première longueur d'onde de résonance demeure intact,
- abaissement d'une longueur d'onde de la lumière injectée de manière à suivre la première longueur d'onde de résonance du premier résonateur, qui décroît jusqu'à ce que la première longueur d'onde de résonance du premier résonateur photonique coïncide avec la résonance du second résonateur photonique, les résonateurs photoniques étant ainsi accordés.

14. Procédé selon la revendication 13, **caractérisé en ce qu'**il comprend une étape d'abaissement de la longueur d'onde de manière à graver les deux résonateurs photoniques en même temps et au même rythme, de sorte que les deux résonateurs photoniques puissent être accordés à une valeur de longueur d'onde de résonance ciblée commune et présenter les mêmes dimensions et longueur d'onde de résonance optique ciblées.

15. Dispositif photonique comprenant au moins un micro résonateur ou un nano résonateur obtenu par un procédé tel que présenté dans l'une quelconque des revendications 1 à 14, le résonateur étant accordé à la longueur d'onde d'un laser ou d'un étalon de référence.

16. Dispositif photonique selon la revendication 15, comprenant plusieurs micro résonateurs ou nano résonateurs, tous les résonateurs étant accordés à une valeur de longueur d'onde de résonance ciblée commune, avec une erreur de longueur d'onde pour chaque longueur d'onde de résonance de chaque résonateur photonique par rapport à la valeur de longueur d'onde de résonance ciblée commune qui est inférieure au pm.

17. Dispositif photonique selon la revendication 15 ou 16, **caractérisé en ce que** le ou les résonateurs présentent comme matériau le nitrure d'aluminium et/ou le nitrure de silicium.

18. Dispositif photonique selon la revendication 17, **caractérisé en ce que** chaque résonateur photonique est un disque, un résonateur photonique à quartz, un résonateur en anneau ou en forme d'hippodrome, un résonateur de Bragg, un résonateur à réseau à rétroaction répartie, un résonateur de Fabry-Perot, un résonateur à cristal photonique, un résonateur construit au sein d'une métasurface, ou un résonateur plasmonique.
